# EUROPEAN PATENT SPECIFICATION

(11) **EP 1 595 688 B1**
(45) Date of publication and mention of the grant of the patent: **16.05.2007**
(21) Application number: 05009711.2
(22) Date of filing: 03.05.2005
(51) Int. Cl.: B29C 70/48, B32B 3/12, B32B 5/02

(54) **Molded laminate and manufacturing method thereof**
Geformter Schichtstoff und Verfahren zu dessen Herstellung
Stratifié moulé et son procédé de production

(30) Priority: 10.05.2004 JP 2004139957
(43) Date of publication of application: 16.11.2005
(73) Proprietor: HONDA MOTOR CO., Ltd., Tokyo (JP); KADO Corporation, Tatsuno-cho Tatsuno-shi Hyogo (JP)
(72) Inventor: Yamada Yasuhiro c/o Honda R&D Co., Ltd, Wako-Shi, Saitama (JP); Kiyomoto Hiroshi c/o Honda R&D Co., Ltd, Wako-shi, Saitama (JP); Kuratani Yasunari c/o KADO Corporation, Tatsuno-shi, Hyogo (JP); Uota Naoki c/o KADO Corporation, Tatsuno-shi, Hyogo (JP); Okayama Takeshi c/o KADO Corporation, Tatsuno-shi, Hyogo (JP)
(74) Representative: Trossin, Hans-Jürgen

(56) References cited:
- EP-A- 0 722 826
- EP-A- 1 005 978
- GB-A- 2 345 662

## Description

### BACKGROUND OF THE INVENTION

### 1. FIELD OF THE INVENTION

The present invention relates to a molded laminate according to the preamble part of claim 3 and a manufacturing method thereof, and particularly, to the molded laminate obtained by the manufacturing method of using an RST (Resin Transfer Molding) method.

### 2. DESCRIPTION OF THE RELATED ART

A molded laminate according to the preamble part of claim 3 is already known from documents GB 2 345 662 A and EP 0 722 826 A2.

From GB 2 345 662 A in particular, a composite structure is known that has a core made of foam or honeycomb wherein on each side of the core a layer of a low melt thermoplastic, e.g. polypropylene, is attached. To each of these layers of low melt thermoplastic, a layer of a laminate composite comprising aligned continuous glass fibres in a matrix of thermoplastic material is disposed, leading to a sandwich laminate structure.

This known laminate structure is manufactured as follows:

Strips of the laminate composite are heated in an infrared oven. A first layer of laminate composite strips is laid up in a first half of a mold. A first sheet of low melt thermoplastic is laid over the first layer of laminate composite strips before the layer of core material is placed in the mold. Then, a second layer of low melt thermoplastic is laid over the layer of core material, and finally the second layer of composite strips is placed on top. Then, a second half of the mold is used to compress the layers together while the heated layers of laminate composite are allowed to cool.

Document EP 0 722 826 A2 discloses a laminate product that is constructed of a central honeycomb core material having cells filled with a cured foam material and cured layers comprised of the preform fibres which have been impregnated with an rtm-resin system and cured inside a mold.

During production, in a first step, a layer of uncured heat-expandable formable material is placed on the top, bottom, and vertical sides of the honeycomb core material that, at this point of time, has empty cells.

In a second step, layers of dry fibre preform are placed over the top layer of the uncured heat-expandable formable material and under the bottom layer of the uncured heat expandable formable material. Thereby, the charge is completed.

Then, the charge is placed inside a mold, the mold is closed, and finally heated to the cure temperature of the heat expandable formable material. At that temperature, the mold is held for sufficient time to expand and cure the heat expandable formable material.

From EP 1 005 978 A2, a molded laminate is known that uses sealing layers between dry fabric sheets on the outer sides of the laminate and a honeycomb core in the centre of the laminate. This serves to prevent thermosetting resin from flowing into the honeycomb core.

In the following, further remarks on the related art are made:

Conventionally, it is widely known a molded laminate where a fibrous reinforcing material containing a hardened resin is laminated on both faces of a porous core material such as a honeycomb material. The molded laminate is excellent in mechanical strength and light in weight, and moreover, because a weight distribution in a direction along the molded laminate is uniform, it is mainly used for an airplane. As a manufacturing method of such a molded laminate can be cited one disclosed in paragraphs 0018 to 0024 and FIG. 1 of Japanese Patent Laid-Open Publication No. 2003-39579 (hereinafter referred to as patent document 1) described later.

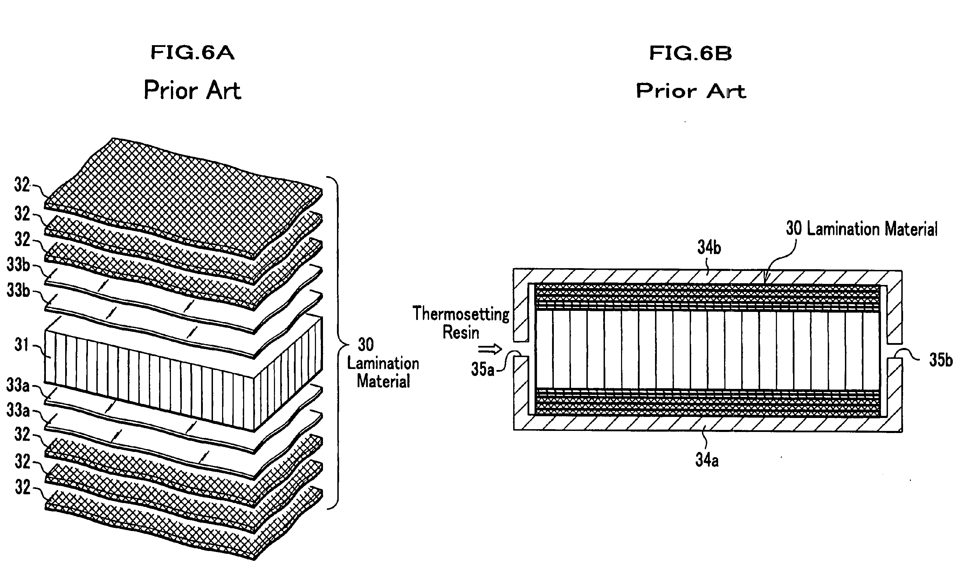

In the manufacturing method of the molded laminate, firstly as shown in FIG. 6A, is prepared a lamination material 30 equipped with a porous core material 31, lower-side joining materials 33a (resin films), upper-side joining materials 33b (resin films), and fibrous reinforcing materials 32 (dry fabric). And as shown in FIG. 6B, the lamination material 30 is sandwiched between a lower mold 34a and an upper mold 34b. Next, to the lamination material 30 is added heat from the lower mold 34a and the upper mold 34b. As a result, the lower-side joining materials 33a and the upper-side joining materials 33b (see FIG. 6A) join the fibrous reinforcing materials 32 (see FIG. 6A) and the porous core material 31 (see FIG. 6A), respectively. Then, as shown in FIG. 6B, a thermosetting resin is pressed into between the lower mold 34a and the upper mold 34b from a resin injection port 35a. While the thermosetting resin pushes air between the lower mold 34a and the upper mold 34b out of an air venthole 35b, it goes around between the lower mold 34a and the upper mold 34b and is gradually impregnated into the fibrous reinforcing materials 32. Then, when the thermosetting resin having been impregnated into the fibrous reinforcing materials 32 is hardened by heat being added to the lamination material 30 from the lower mold 34a and the upper mold 34b, the molded laminate is obtained where the fibrous reinforcing materials 32 containing the hardened resin are arranged on both faces of the porous core material 31.

In this connection, in the manufacturing method of such a molded laminate, in order to realize weight-saving and weight-uniformity of the molded laminate obtained, it has to be surely prevented that a thermosetting resin enters within pores of the porous core material 31 (see FIG. 6A). On the other hand, in the manufacturing method, if trying to surely prevent the thermosetting resin from entering within the pores of the porous core material 31, it is necessary as shown in FIG. 6A to arrange a plurality of sheets of lower-side joining materials 33a (upper-side joining materials 33b) or to increase a thickness of the lower-side joining materials 33a (upper-side joining materials 33b). Accordingly, in accordance with such the manufacturing method, because a use amount of the lower-side joining materials 33a (upper-side joining materials 33b) increases, there is a problem that a weight of the molded laminate increases and that manufacturing cost thereof becomes higher.

Consequently, it is strongly requested to provide a molded laminate and manufacturing method thereof of which weight and manufacturing cost are reduced.

### SUMMARY OF THE INVENTION

A first aspect of the present invention to solve the problems described above is a manufacturing method of a molded laminate where a first fibrous reinforcing material layer, a first joining material layer, a porous core material layer, a second joining material layer, and a second fibrous reinforcing material layer are laminated in this order, and the method comprises an impregnating process of placing a first fibrous reinforcing material on a molding tool, and impregnating a thermosetting resin into the first fibrous reinforcing material on the molding tool; a hardening process of hardening the thermosetting resin impregnated into the first fibrous reinforcing material, and forming the first fibrous reinforcing material layer; and a laminating process of laminating the first joining material layer, the porous core material layer, the second joining material layer, and the second fibrous reinforcing material layer on the first fibrous reinforcing material layer.

In accordance with the manufacturing method, because the porous core material layer is laminated through the first joining material layer on the first fibrous reinforcing material layer formed by hardening the thermosetting resin impregnated into the first fibrous reinforcing material, the porous core material layer is not yet arranged on the first fibrous reinforcing material layer in the impregnating process of impregnating the thermosetting resin into the first fibrous reinforcing material. Accordingly, in the impregnating process the thermosetting resin does not enter within pores of the porous core material layer. As a result, in the manufacturing method related to the present invention it is not necessary to use a plurality of sheets of the lower-side joining materials 33a (see FIG. 6A) like a conventional manufacturing method (for example, see the patent document 1) in order to prevent the thermosetting resin from entering within the pores of the porous core material 31 (see FIG. 6A). In other words, in accordance with the manufacturing method related to the present invention, because a thickness of the first joining material layer is held minimum only to join the first fibrous reinforcing material layer and the porous core material layer, the molded laminate obtained is reduced in weight thereof, compared to one obtained by a conventional manufacturing method (for example, see the patent document 1).

In addition, in accordance with the manufacturing method, because the thickness of the first joining material layer is held minimum only to join the first fibrous reinforcing material layer and the porous core material layer, the molded laminate obtained is reduced in manufacturing cost thereof, compared to one obtained by a conventional manufacturing method (for example, see the patent document 1).

A preferred implementation of the above-described manufacturing method of the molded laminate is characterized in that the laminating process comprises a placing process of placing a first joining material, a porous core material, a second joining material, and a second fibrous reinforcing material on the first fibrous reinforcing material layer in this order; a joining process of mutually joining the first fibrous reinforcing material layer, the porous core material, and the second fibrous reinforcing material by the first joining material and the second joining material; an impregnating process of impregnating the thermosetting resin into the second fibrous reinforcing material; and a hardening process of hardening the thermosetting resin impregnated into the second fibrous reinforcing material, and forming a second fibrous reinforcing material layer.

In accordance with the manufacturing method the first fibrous reinforcing material layer, the porous core material, and the second fibrous reinforcing material are joined by the first joining material and the second joining material. In other words, between the first fibrous reinforcing material layer and the porous core material is formed a first joining material layer consisting of the first joining material; between the porous core material layer and the second fibrous reinforcing material is formed a second joining material layer consisting of the second joining material. In addition, the porous core material forms a porous core material layer by being sandwiched between the first joining material layer and the second joining material layer. Then by hardening the thermosetting resin impregnated into the second fibrous reinforcing material, the second fibrous reinforcing material layer is formed on the second joining material layer, and thus the molded laminate is manufactured. Meanwhile, a thickness of the second joining material (second joining material layer) may be set at around thickness where the thermosetting resin does not enter within the pores of the porous core material in the impregnating process of impregnating the thermosetting resin into the second fibrous reinforcing material.

A second aspect of the present invention is a molded laminate where a first fibrous reinforcing material layer, a first joining material layer, a porous core material layer, a second joining material layer, and a second fibrous reinforcing material layer are laminated in this order exhibiting all features of claim 3. Such a molded laminate is obtained via an impregnating process of placing a first fibrous reinforcing material on a molding tool, and impregnating a thermosetting resin into the first fibrous reinforcing material on the molding tool; a hardening process of hardening the thermosetting resin impregnated into the first fibrous reinforcing material, and forming the first fibrous reinforcing material layer; and a laminating process of laminating the first joining material layer, the porous core material layer, the second joining material layer, and the second fibrous reinforcing material layer on the first fibrous reinforcing material layer.

In accordance with the molded laminate, because the thickness of the first joining material layer is held minimum only to join the first fibrous reinforcing material layer and the porous core material layer same as in the first aspect of the present invention, the molded laminate obtained is reduced in weight thereof, compared to one obtained by a conventional manufacturing method (for example, see the patent document 1).

In addition, in accordance with the molded laminate, because the thickness of the first joining material layer is held minimum only to join the first fibrous reinforcing material layer and the porous core material layer same as in the first invention, the molded laminate obtained is reduced in manufacturing cost thereof, compared to one obtained by a conventional manufacturing method (for example, see the patent document 1).

In addition, because the molded laminate has the first fibrous reinforcing material layer and the second fibrous reinforcing material layer on both faces of the porous core material layer, it is excellent in mechanical strength thereof.

A preferred embodiment of the molded laminate of the second aspect of the present invention is characterized in that the porous core material layer is formed any of a honeycomb material and foam.

Because in the molded laminate the porous core material (porous core material layer) of a core material is formed any of a honeycomb material and foam, the molded laminate has a needed mechanical strength and becomes lighter in weight thereof.

### BRIEF DESCRIPTION OF THE DRAWINGS

FIG. 1 is a section drawing of a lamination panel related to an embodiment of the present invention.
FIG. 2 is a schematic drawing of a manufacturing apparatus (lamination panel manufacturing apparatus) used for a manufacturing method of the lamination panel of FIG. 1.
FIGS. 3A to 3C are schematic drawings showing a manufacturing process of the lamination panel of FIG. 1.
FIGS. 4A to 4C are schematic drawings showing a manufacturing process of the lamination panel of FIG. 1.
FIG. 5 is a section drawing of a lamination panel related to another embodiment of the present invention.
FIG. 6A is a configuration drawing of a lamination material used in a manufacturing method of a conventional molded laminate; FIG. 6B is a conceptual drawing for illustrating the manufacturing method of the conventional molded laminate.

### DESCRIPTION OF THE PREFERRED EMBODIMENTS

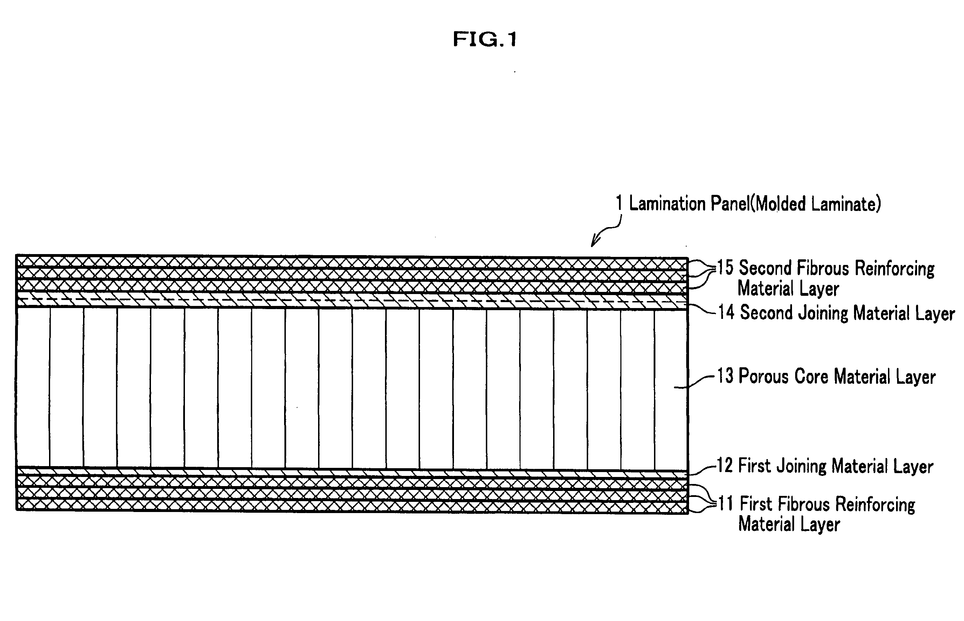

Here will be described embodiments of the present invention in detail, referring to drawings as needed. With respect to a referring drawing, FIG. 1 is a section drawing of a lamination panel related to an embodiment of the present invention.

### [Molded Laminate]

As shown in FIG. 1, a lamination panel 1 as a molded laminate in the "SUMMARY OF THE INVENTION" (hereinafter simply referred to as "lamination panel 1") is a lamination body where a first fibrous reinforcing material layers 11 containing a hardened resin, a first joining material layer 12, a porous core material layer 13, a second joining material layer 14, and a second fibrous reinforcing material layers 15 containing a hardened resin are laminated in this order.

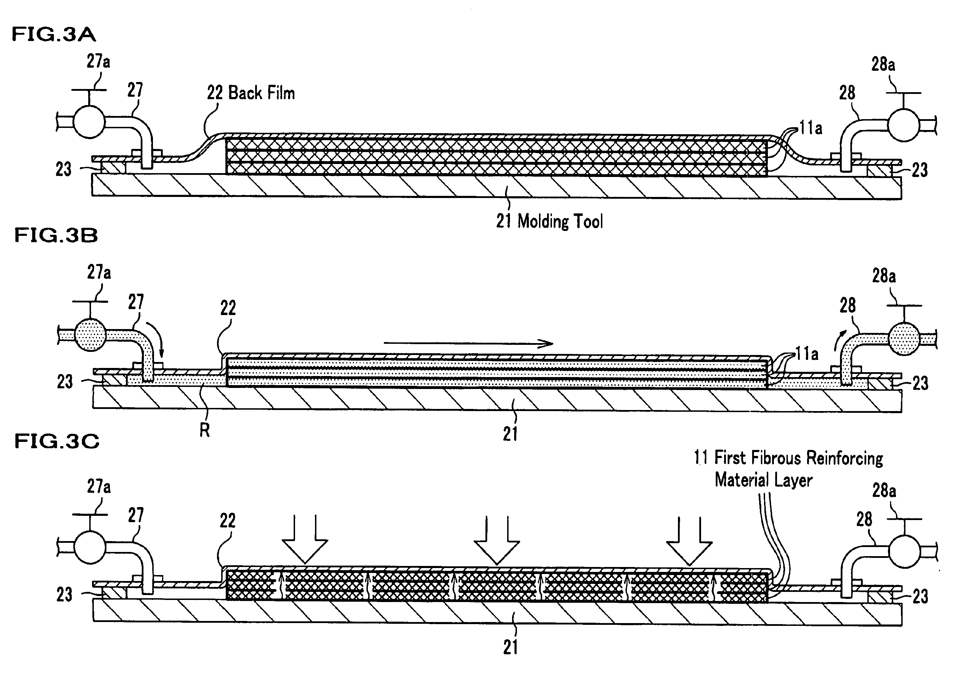

The first fibrous reinforcing material layers 11 are something where a thermosetting resin R (see FIG. 3B) is impregnated into first fibrous reinforcing materials 11a (see FIG. 3A) as described later, and after then, the thermosetting resin R is hardened.

As the first fibrous reinforcing materials 11a (see FIG. 3A) can be cited, for example, any of woven cloth and non woven cloth of a fiber: as the fiber can be cited a carbon fiber, a glass fiber, a Kevlar (registered trademark) fiber, a polyester fiber, a spectral fiber, and the like.

As the thermosetting resin R (see FIG. 3B) can be cited, for example, an epoxy resin, a bismaleimide resin, a polyimide resin, an urethane resin, a cyanate resin, a vinylester resin, a polyester resin, a phenol resin, and the like.

The first fibrous reinforcing material layers 11 give toughness to the lamination panel 1, and the lamination panel 1 of the embodiment comprises three layers of such first fibrous reinforcing material layers 11.

The first joining material layer 12 joins the first fibrous reinforcing material layers 11 and the porous core material layer 13 described next. The thickness of the first joining material layer 12 is half of that of the second joining material layer 14. The first joining material layer 12 in the embodiment is formed of a layer containing a thermosetting resin: as the thermosetting resin can be cited, for example, an epoxy resin, a bismaleimide resin, a polyimide resin, an urethane resin, a cyanate resin, a phenol resin, and the like. The first joining material layer 12 can be formed by hardening, for example, any of the thermosetting resin coated on the first fibrous reinforcing material layers 11 and a sheet member such as a prepreg (pre-impregnated material) containing the thermosetting resin laminated on the first fibrous reinforcing material layers 11 as described later.

The porous core material layer 13 becomes a core material of the lamination panel 1, and as the porous core material layer 13 can be cited one formed of, for example, a honeycomb material, foam, and the like: above all, one formed of the honeycomb is preferable because a mechanical strength such as an anti-compressive force in a thickness direction of the lamination panel 1 augments.

The second joining material layer 14 joins the porous core material layer 13 and the second fibrous reinforcing material layers 15 described next. In addition, the second joining material layer 14 brings out a sealing ability so that the thermosetting resin R does not enter within pores of the porous core material layer 13 in impregnating the thermosetting resin R into second fibrous reinforcing materials 15a (see FIG. 4B) as described later. The second joining material layer 14 in the embodiment is formed of a layer containing a thermosetting resin: as the thermosetting resin can be cited the same ones used in the first joining material layer 12. And the second joining material layer 14 can be formed by hardening, for example, any of the thermosetting resin coated on the porous core material layer 13 and a sheet member such as a prepreg containing the thermosetting resin laminated on the porous core material layer 13 as described later.

The second fibrous reinforcing material layers 15 are formed of the same materials as the first fibrous reinforcing material layers 11. The lamination panel 1 of the embodiment comprises three layers of such second fibrous reinforcing material layers 15.

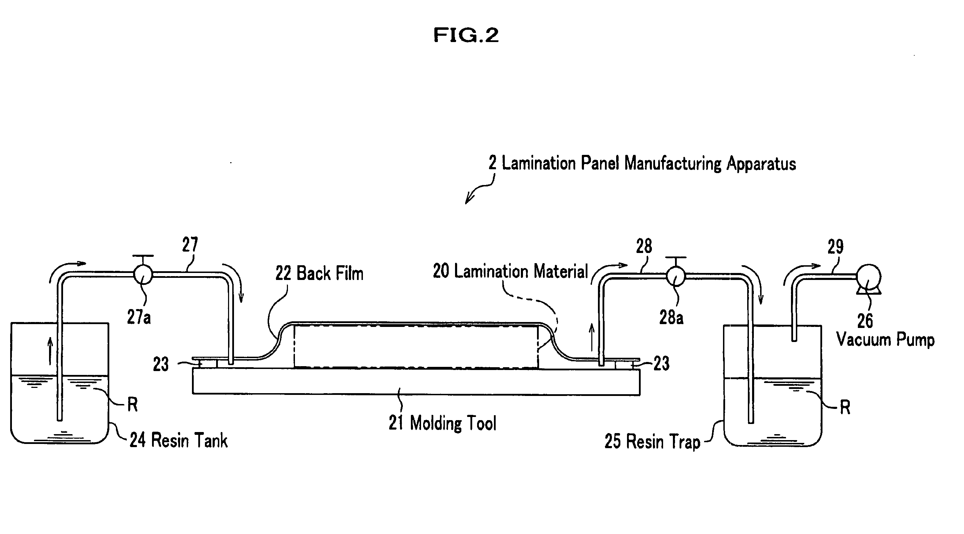

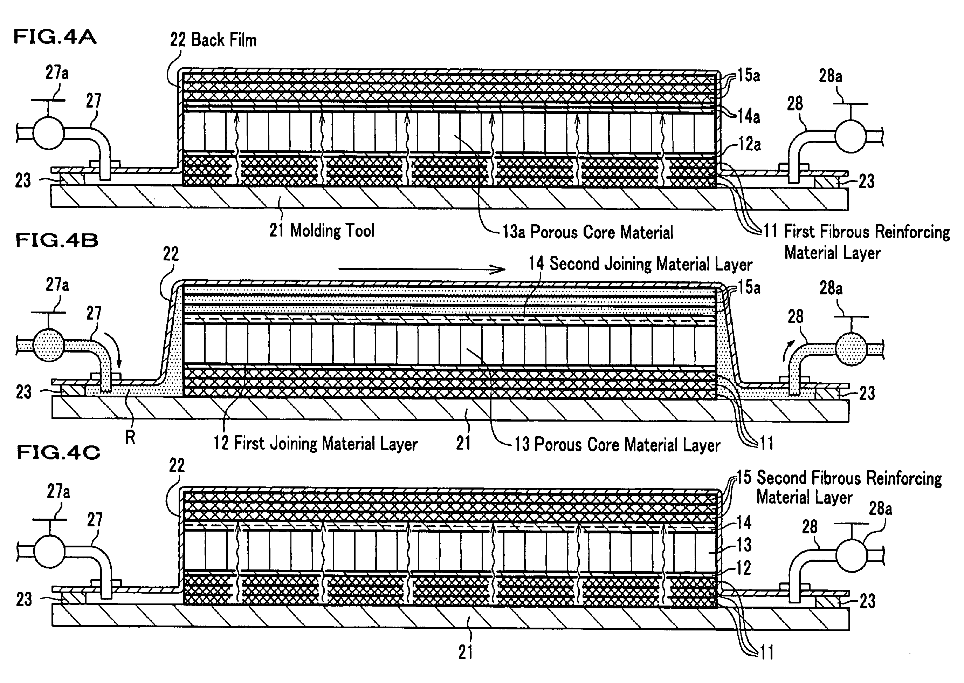

Next will be described a manufacturing method of a lamination panel and a manufacturing apparatus used in the manufacturing method related to the embodiment, referring to drawings as needed. With respect to the referring drawings, FIG. 2 is a schematic drawing of a manufacturing apparatus (lamination panel manufacturing apparatus) used for a manufacturing method of the lamination panel of FIG. 1; FIGS. 3A to 3C are schematic drawings showing a manufacturing process of the lamination panel of FIG. 1; and FIGS. 4A to 4C are schematic drawings showing a manufacturing process of the lamination panel of FIG. 1. Meanwhile, in FIGS. 3A to 3C and 4A to 4C descriptions of a resin tank 24, a resin trap 25, a vacuum pump 26, and a third piping 29 shown in FIG. 2 are omitted.

Here will be described the manufacturing apparatus used in the manufacturing method of the lamination panel in advance of a description of the manufacturing method of the lamination panel (hereinafter simply referred to as "lamination panel manufacturing apparatus") related to the embodiment.

### [Lamination Panel Manufacturing Apparatus]

As shown in FIG. 2, a lamination panel manufacturing apparatus 2 comprises a molding tool 21 where a lamination material 20 is placed, and a back film 22 that covers the lamination material 20 on the molding tool 21; and the apparatus 2 is designed to be able to use a VARTM (Vacuum-Assisted Resin Transfer Molding) method.

The molding tool 21 is a platy body of which upper face is a flat surface and is designed so that the lamination material 20 can be placed on the upper face. And a heater not shown is provided at the molding tool 21 and is designed to heat the lamination material 20.

In the back film 22 edges thereof are contacted by sealing tapes 23 so as to be able to seal the lamination material 20 on the molding tool 21. Meanwhile, the back film 22 is designed to be separable from the molding tool 21 and to be able to be contacted again to the molding tool 21 in changing the lamination material 20 placed on the molding tool 21.

The lamination panel manufacturing apparatus 2 further comprises the resin tank 24, the resin trap 25, and the vacuum pump 26.

The resin tank 24 reserves the thermosetting resin R. It is designed that in the lamination panel manufacturing apparatus 2 a spacing of the back film 22 and the molding tool 21 and an inside of the resin tank 24 communicate through a first piping 27 so that an impregnation of the thermosetting resin R into the lamination material 20 is enabled. And at the first piping 27 is provided a valve 27a.

The resin trap 25 captures the thermosetting resin R sucked out from between the back film 22 and the molding tool 21 by the vacuum pump 26 and makes the thermosetting resin R not flow in the vacuum pump 26. It is designed that in the lamination panel manufacturing apparatus 2 a spacing of the back film 22 and the molding tool 21 and an inside of the resin trap 25 communicate through a second piping 28. And at the second piping 28 is provided a valve 28a.

The vacuum pump 26 is connected to the resin trap 25 by the third piping 29. It is designed that in the lamination panel manufacturing apparatus 2 the vacuum pump 26 can reduce a pressure between the back film 22 and the molding tool 21 through the second piping 28, the resin trap 25, and the third piping 29 by the vacuum pump 26 performing suction.

### [Manufacturing Method of Lamination Panel]

Next will be described a manufacturing method of a lamination panel related to the embodiment, while describing an operation of the lamination panel manufacturing apparatus.

In the manufacturing method of the lamination panel 1 (see FIG. 1) related to the embodiment, as shown in FIG. 3A, overlapped three sheets of the first fibrous reinforcing materials 11a are firstly arranged air-tightly between the back film 22 and the molding tool 21. Next, if the valves 27a and 28a are opened and the vacuum pump 26 (see FIG. 2) is activated, as shown in FIG. 3B, the thermosetting resin R reserved in the resin tank 24 (see FIG. 2) is filled between the back film 22 and the molding tool 21. Meanwhile, in the embodiment an epoxy resin (product name CYCOM823RTM (registered trademark)) manufactured by CYTEC Inc is used as the thermosetting resin R.

As a result, the thermosetting resin R is impregnated into the first fibrous reinforcing materials 11a. Meanwhile, a temperature of the thermosetting resin R at this time may be set at around a room temperature (for example, 25 degrees Celsius). A process of impregnating the thermosetting resin R into the first fibrous reinforcing materials 11a corresponds to the "impregnating process" in the "SUMMARY OF THE INVENTION (the first invention)."

Next, if the valve 27a is closed, the valve 28a is opened, and the vacuum pump 26 (see FIG. 2) is activated, a pressure between the back film 22 and the molding tool 21 is reduced. The pressure between the back film 22 and the molding tool 21 at this time may be set at around -933 hPa (-700 mmHg) in vacuum.

As a result, although not shown, the first fibrous reinforcing materials 11a result in being pushed toward the molding tool 21 by the back film 22 and make a panel-like form so as to be along an upper face of the molding tool 21. Then an excess amount of the thermosetting resin R contained in the first fibrous reinforcing materials 11a is sucked out by the vacuum pump 26 (see FIG. 2) and is captured by the resin trap 25 (see FIG. 2).

Then as shown in FIG. 3C, if the first fibrous reinforcing materials 11a containing the thermosetting resin R (see FIG. 3B) is heated by the molding tool 21, the first fibrous reinforcing material layers 11 are formed by the thermosetting resin R hardening. Meanwhile, a heating temperature of the thermosetting resin R may be set at around 125 degrees Celsius; and heating time for around two hours. A process of hardening the thermosetting resin R impregnated into the first fibrous reinforcing materials 11a and forming the first fibrous reinforcing material layers 11 corresponds to the "hardening process" in the "SUMMARY OF THE INVENTION (the first invention)."

Next, as shown in FIG. 4A, on the first fibrous reinforcing material layers 11 obtained are overlapped one sheet of first joining material 12a, porous core material 13a, two sheets of second joining materials 14a, and three sheets of second fibrous reinforcing materials 15a in this order. These are air-tightly arranged between the back film 22 and the molding tool 21. Meanwhile, although here as the first joining material 12a and the second joining materials 14a are used sheet members containing a thermosetting resin (epoxy resin (product name LC17 manufactured by MITSUBISHI RAYON CO., LTD.), the first joining material 12a and the second joining materials 14a may also be the thermosetting resin R coated on the first fibrous reinforcing material layers 11 and another thermosetting resin coated on the porous core material 13a, respectively. In addition, as the thermosetting resin can be used one consisting of a main agent and a hardener and can be cited one consisting of AV138 (main agent) and HV998 (hardener) manufactured by Nagase Chemtex Corp. The overlapping process corresponds to the "placing process" in the "SUMMARY OF THE INVENTION (the second invention)."

Next, as shown in FIG. 4A, if the valve 27a is closed, the valve 28a is opened, and the vacuum pump 26 (see FIG. 2) is activated, a pressure between the back film 22 and the molding tool 21 is reduced. The pressure between the back film 22 and the molding tool 21 at this time may be set at around -933 hPa (-700 mmHg) in vacuum. As a result, as shown in FIG. 4A, the first joining material 12a, the porous core material 13a, the second joining materials 14a, and the second fibrous reinforcing materials 15a are pushed toward the first fibrous reinforcing material layers 11 by the back film 22. Next, the first joining material 12a and the second joining materials 14a are heated by the molding tool 21. Meanwhile, a heating temperature of the first joining material 12a and the second joining materials 14a are available if it is not less than a room temperature. In addition, the first joining material 12a and the second joining materials 14a may also be heated, for example, at around 70 degrees Celsius and for around six hours.

Then, the first joining material 12a and the second joining materials 14a become hardened by being heated and form the first joining material layer 12 (see FIG. 1) and the second joining material layer 14 (see FIG. 1), respectively. At this time the two sheets of the second joining materials 14a become integrated. And the first joining material layer 12 and the second joining material layer 14 occlude openings of pores existing at both faces of the porous core material 13a, the first joining material layer 12 joins the first fibrous reinforcing material layers 11 and the porous core material 13a, and the second joining material layer 14 joins the porous core material 13a and the second fibrous reinforcing materials 15a. Meanwhile, a cooling temperature of the first joining material layer 12 and the second joining material layer 14 may be set at around 40 degrees Celsius; and cooling time thereof for around one hour. And as shown in FIG. 1, the porous core material 13a sandwiched between the first joining material layer 12 and the second joining material layer 14 forms the porous core material layer 13 in the lamination panel 1. Meanwhile, a process of mutually joining such the first fibrous reinforcing material layers 11, the porous core material 13a, and the second fibrous reinforcing materials 15a by the first joining material 12a and the second joining materials 14a corresponds to the "joining process" in the "SUMMARY OF THE INVENTION (the second invention)."

Next, if the valves 27a and 28a are opened and the vacuum pump 26 (see FIG. 2) is activated, as shown in FIG. 4B, the thermosetting resin R reserved in the resin tank 24 (see FIG. 2) is filled between the back film 22 and the molding tool 21. As a result, the thermosetting resin R is impregnated into the second fibrous reinforcing materials 15a. Meanwhile, a temperature of the thermosetting resin R at this time may be set at around a room temperature (for example, 25 degrees Celsius) same as described before. A process of impregnating the thermosetting resin R into the second fibrous reinforcing materials 15a corresponds to the "impregnating process" in the "SUMMARY OF THE INVENTION (the second invention)."

Next, if the valve 27a is closed, the valve 28a is opened, and the vacuum pump 26 (see FIG. 2) is activated, a pressure between the back film 22 and the molding tool 21 is reduced. The pressure between the back film 22 and the molding tool 21 at this time may be set at around -933 hPa (-700 mmHg) in vacuum.

As a result, although not shown, the second fibrous reinforcing materials 15a result in being pushed toward the molding tool 21 by the back film 22. Then an excess amount of the thermosetting resin R contained in the second fibrous reinforcing materials 15a is sucked out by the vacuum pump 26 (see FIG. 2) and is captured by the resin trap 25 (see FIG. 2).

Then as shown in FIG. 4C, if the second fibrous reinforcing materials 15a containing the thermosetting resin R are heated by the molding tool 21, the second fibrous reinforcing material layers 15 are formed by the thermosetting resin R hardening. Meanwhile, a temperature of the thermosetting resin R may be set at around 125 degrees Celsius; and heating time for around two hours. A process of hardening the thermosetting resin R impregnated into the second fibrous reinforcing materials 15a and forming the second fibrous reinforcing material layers 15 corresponds to the "hardening process" in the "SUMMARY OF THE INVENTION (the second invention)."

Then by thus forming the second fibrous reinforcing material layers 15, as shown in FIG. 4C, on the molding tool 21 is obtained the lamination panel 1 (see FIG. 1) where the first fibrous reinforcing material layers 11 containing the hardened thermosetting resin R, the first joining material layer 12, the porous core material layer 13, the second joining material layer 14, and the second fibrous reinforcing material layers 15 containing the hardened thermosetting resin R are laminated in this order. Meanwhile, a process of laminating the first joining material layer 12, the porous core material layer 13, the second joining material layer 14, and the second fibrous reinforcing material layers 15 on the first fibrous reinforcing material layers 11 corresponds to the "laminating process" in the "SUMMARY OF THE INVENTION (the first invention)."

In accordance with such the manufacturing method of the lamination panel 1, because the porous core material layer 13 (see FIG. 4B) is laminated through the first joining material layer 12 on the first fibrous reinforcing material layers 11 (see FIG. 3C) formed by hardening the thermosetting resin R impregnated into the first fibrous reinforcing materials 11a, as shown in FIG. 3B, in the impregnating process of impregnating the thermosetting resin R into the first fibrous reinforcing materials 11a the porous core material 13a (see FIG. 4A) is not yet arranged on the first fibrous reinforcing materials 11a. Accordingly, the thermosetting resin R does not enter within pores of the porous core material 13a (porous core material layer 13 (see FIG. 4B)) in the impregnating process of the thermosetting resin R. As a result, in the manufacturing method of the embodiment it is not necessary to use a plurality of sheets of the lower-side joining materials 33a (see FIG. 6A) in order to prevent a thermosetting resin from entering within the pores of the porous core material 31 (see FIG. 6A) like a conventional manufacturing method (for example, see the patent document 1). In other words, in accordance with the manufacturing method of the embodiment, because as shown in FIG. 1, a thickness of the first joining material layer 12 is held minimum only to join the first fibrous reinforcing material layers 11 and the porous core material layer 13, the lamination panel 1 obtained (see FIG. 1) is reduced in weight thereof, compared to a molded laminate such as a lamination panel obtained by a conventional manufacturing method (for example, see the patent document 1).

In addition, in accordance with the manufacturing method of the embodiment, because as shown in FIG. 1, the thickness of the first joining material layer 12 is held minimum only to join the first fibrous reinforcing material layers 11 and the porous core material layer 13, the lamination panel 1 obtained is reduced in manufacturing cost thereof, compared to a molded laminate such as a lamination panel obtained by a conventional manufacturing method (for example, see the patent document 1).

In addition, in accordance with the manufacturing method of the embodiment, as shown in FIG. 4C, can be obtained the lamination panel 1, where the first fibrous reinforcing material layers 11 and the second fibrous reinforcing material layers 15 are arranged on both faces of the porous core material layer 13, and which is excellent in mechanical strength thereof.

In addition, in accordance with the manufacturing method of the embodiment, because as shown in FIG. 4A, the first joining material layer 12a used is one and it is not necessary to overlap a plurality of sheets of the lower-side joining materials 33a (see FIG. 6A) on the fibrous reinforcing materials 32 (see FIG. 6A) like a conventional manufacturing method (for example, see the patent document 1), manpower for overlapping is reduced.

In addition, in accordance with the manufacturing method of the embodiment, because as shown in FIG. 4A, the first joining material layer 12a used is one and a plurality of sheets of the lower-side joining materials 33a (see FIG. 6A) is not necessary like a conventional manufacturing method (for example, see the patent document 1), a thickness of the lamination panel 1 itself is reduced. As a result, in accordance with the manufacturing method, for example, when the upper face of the molding tool 21 presents a three dimensional form with concavity and convexity, the molding tool 21 is excellent in a molding ability for the lamination panel 1.

In addition, the manufacturing method of the embodiment does not need the upper mold 34b (see FIG. 6B) as a molding tool different from a conventional manufacturing method (for example, see the patent document 1). Accordingly, in accordance with the manufacturing method of the embodiment cost of the molding tool can be reduced.

Thus, although the embodiment of the present invention is described, the invention is not limited thereto. For example, in accordance with the manufacturing method, in the impregnating process of impregnating the thermosetting resin R into the first fibrous reinforcing materials 11a and the second fibrous reinforcing materials 15a, as shown in FIG. 2, the thermosetting resin R is filled between the back film 22 and the molding tool 21 from the resin tank 24 by performing suction with the vacuum pump 26; as an alternative manufacturing method, after a pressure between the back film 22 and the molding tool 21 is reduced by the vacuum pump 26, the thermosetting resin R may be pressed into between the back film 22 and the molding tool 21. An injection pressure of the thermosetting resin R at this time may be set at around 2026 hPa (two atmospheres).

In addition, in the manufacturing method of the embodiment, although as shown in FIG. 4A, the joining process of mutually joining the first fibrous reinforcing material layers 11, the porous core material 13a, and the second fibrous reinforcing materials 15a by the first joining material 12a and the second joining materials 14a is performed in one heating process, the present invention is not limited thereto: for example, the manufacturing method may have a process of firstly overlapping the first joining material 12a and the porous core material 13a on the first fibrous reinforcing material layers 11, and then joining the first fibrous reinforcing material layers 11 and the porous core material 13a by heating the first joining material 12a; and a process of overlapping the second joining materials 14a and the second fibrous reinforcing materials 15a on the porous core material 13a, and then joining the porous core material 13a and the second fibrous reinforcing materials 15a by heating the second joining material 14a.

In addition, in the embodiment, although as the first joining material layer 12 and the second joining material layer 14 are cited ones consisting of thermosetting resins, the present invention is not limited thereto, and the embodiment may comprise the first joining material layer 12 and the second joining material layer 14 consisting of thermal plastic resins. As the thermal plastic resins can be cited, for example, a polyetherketone resin, a polyphenylene sulfide resin, a polyamide resin, a polyether imide resin, a polysulfone resin, a poly butadiene resin, a polyethylene resin, a polypropylene resin, a polybutylene resin, a polyvinyl chloride resin, a polyvinyl acetate resin, and the like.

In addition, although the manufacturing method in the embodiment uses a platy body with a flat surface on an upper face as the molding tool 21 (see FIG. 2), the present invention is not limited thereto, and the method may use a molding tool where concavity and convexity are formed on an upper face thereof.

In addition, although the manufacturing method in the embodiment is intended so that as shown in FIG. 3A, the molding tool 21 and the first fibrous reinforcing material 11a are directly contacted, and so that as shown in FIG. 4A, the back film 22 and the second fibrous reinforcing materials 15a are directly contacted, the manufacturing method of the present invention may also make mold releasing sheets intervene between the molding tool 21 and the first fibrous reinforcing material 11a and between the back film 22 and the second fibrous reinforcing materials 15a.

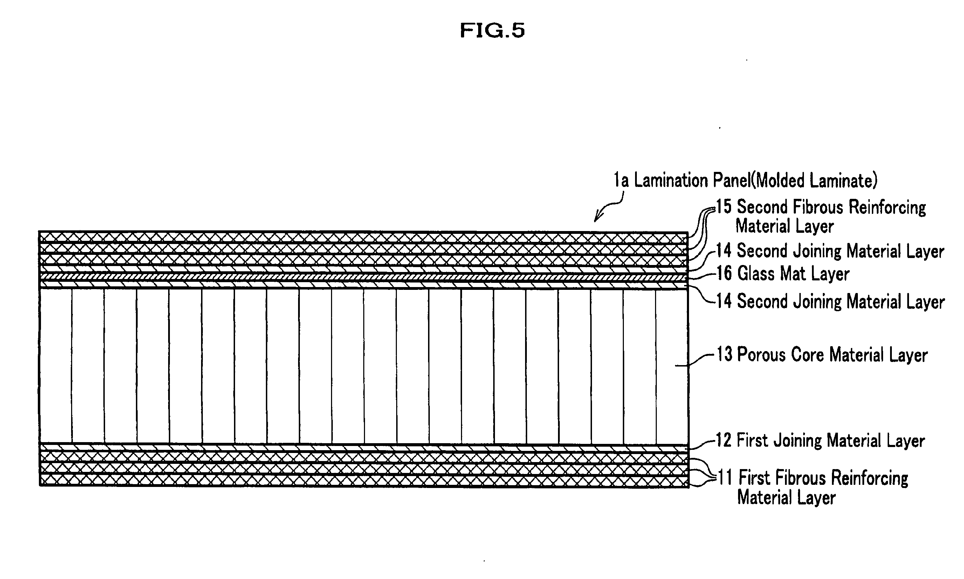

In addition, although in the lamination panel 1 (see FIG. 1) of the embodiment the second joining material layer 14 consists of one layer consisting of a thermosetting resin, the present invention is not limited thereto: for example, as shown in FIG. 5, a lamination panel 1a (molded laminate) is available where another material layer such as a glass mat layer 16 is provided in the second joining material layer 14. In addition, the another material layer provided in the second joining material layer 14 may be any of one layer and more than one layer.

A manufacturing method of a molded laminate (1) where a first fibrous reinforcing material layer (11), a first joining material layer (12), a porous core material layer (13), a second joining material layer (14), and a second fibrous reinforcing material layer (15) are laminated in this order, and the method comprises an impregnating process of placing a first fibrous reinforcing material (11a) on a molding tool (21), and impregnating a thermosetting resin (R) into the first fibrous reinforcing material on the molding tool; a hardening process of hardening the thermosetting resin impregnated into the first fibrous reinforcing material, and forming the first fibrous reinforcing material layer; and a laminating process of laminating the first joining material layer, the porous core material layer, the second joining material layer, and the second fibrous reinforcing material layer on the first fibrous reinforcing material layer.

## Claims

1. A manufacturing method of a molded laminate (1) comprising:
an impregnating process of placing a first fibrous reinforcing material (11a) on a molding tool (21), and impregnating a thermosetting resin (R) into said first fibrous reinforcing material on said molding tool;
a hardening process of hardening said thermosetting resin impregnated into said first fibrous reinforcing material and forming a first fibrous reinforcing material layer (11); and
a laminating process of laminating a first joining material layer (12), a porous core material layer (13), a second joining material layer (14), and a second fibrous reinforcing material layer (15) on said first fibrous reinforcing material layer,
wherein in the molded laminate said first fibrous reinforcing material layer, said first joining material layer, said porous core material layer, said second joining material layer, and said second fibrous reinforcing are laminated in this order.

2. A manufacturing method of a molded laminate according to claim 1, the method comprising:
a placing process of placing a first joining material (12a), a porous core material (13a), a second joining material (14a), and a second fibrous reinforcing material (15a) on said first fibrous reinforcing material layer in this order;
a joining process of mutually joining said first fibrous reinforcing material layer, said porous core material, and said second fibrous reinforcing material by said first joining material and said second joining material;
an impregnating process of impregnating said thermosetting resin into said second fibrous reinforcing material; and
a hardening process of hardening said thermosetting resin impregnated into said second fibrous reinforcing material and forming a second fibrous reinforcing material layer.

3. A molded laminate comprising:
a first fibrous reinforcing material layer (11);
a first joining material layer (12);
a porous core material layer (13);
a second joining material layer (14); and
a second fibrous reinforcing (15),
wherein all of the above are laminated in this order, and
**characterized in that** said first fibrous reinforcing material layer (11) comprises a hardened first fibrous reinforcing material impregnated with a thermosetting resin, wherein the thickness of said first joining material layer (12) is half of the thickness of the second joining material layer (14).

4. A molded laminate according to claim 3, wherein said porous core material layer is formed any of a honeycomb material and foam.

## Patentansprüche

1. Verfahren einer Herstellung eines geformten Laminats (1), umfassend:
einen Imprägnierprozess eines Platzierens eines ersten faserigen Verstärkungsmaterials (11a) auf einem Formwerkzeug (21) und eines Imprägnierens eines thermisch aushärtenden Kunststoffes (R) in das erste faserige Verstärkungsmaterial auf dem Formwerkzeug;
einen Aushärteprozess eines Aushärtens des thermisch aushärtenden Kunststoffes, welcher in das erste faserige Verstärkungsmaterial hinein imprägniert ist, und eines Ausformens einer ersten Faserverstärkungsmateriallage (11); sowie
einen Laminierprozess eines Laminierens einer ersten Verbindungsmateriallage (12), einer porösen Kernmateriallage (13), einer zweiten Verbindungsmateriallage (14) und einer zweiten Faserverstärkungsmateriallage (15) auf die erste Faserverstärkungsmateriallage, wobei in dem geformten Laminat die erste Faserverstärkungsmateriallage, die erste Verbindungsmateriallage, die poröse Kernmateriallage, die zweite Verbindungsmateriallage und die zweite Faserverstärkung in dieser Reihenfolge laminiert werden.

2. Verfahren einer Herstellung eines geformten Laminats nach Anspruch 1, wobei das Verfahren umfasst:
einen Platzierprozess eines Platzierens eines ersten Verbindungsmaterials (12a), eines porösen Kernmaterials (13a), eines zweiten Verbindungsmaterials (14a) und eines zweiten faserigen Verstärkungsmaterials (15a) auf der ersten Faserverstärkungsmateriallage in dieser Reihenfolge;
einen Verbindungsprozess eines wechselseitigen Verbindens der ersten Faserverstärkungsmateriallage, des porösen Kernmaterials und des zweiten faserigen Verstärkungsmaterials durch das erste Verbindungsmaterial und das zweite Verbindungsmaterial;
einen Imprägnierprozess eines Imprägnierens des thermisch aushärtenden Kunststoffes in das zweite faserige Verstärkungsmaterial; sowie
einen Aushärtprozess eines Aushärtens des thermisch aushärtenden Kunststoffes, welcher in das zweite faserige Verstärkungsmaterial imprägniert ist, und eines Ausbildens einer zweiten Faserverstärkungsmateriallage.

3. Geformtes Laminat, umfassend:
eine erste Faserverstärkungsmateriallage (11);
eine erste Verbindungsmateriallage (12);
eine poröse Kernmateriallage (13);
eine zweite Verbindungsmateriallage (14); und
eine zweite faserige Verstärkung (15),
wobei alle obigen in dieser Reihenfolge laminiert sind, und **dadurch gekennzeichnet, dass** die erste Faserverstärkungsmateriallage (11) ein ausgehärtetes erstes faseriges Verstärkungsmaterial umfasst, welches mit einem thermisch aushärtenden Kunststoff imprägniert ist, wobei die Dicke der ersten Verbindungsmateriallage (12) die Hälfte der Dicke der zweiten Verbindungsmateriallage (14) ist.

4. Geformtes Laminat nach Anspruch 3, wobei die poröse Kernmateriallage gebildet ist aus einem beliebigen aus Wabenmaterial und Schaum.

## Revendications

1. Procédé de fabrication d'un stratifié moulé (1) comprenant :
un processus d'imprégnation consistant à placer un premier matériau de renfort fibreux (11a) sur un outil de moulage (21), et imprégner une résine thermodurcissable (R) dans ledit premier matériau de renfort fibreux sur ledit outil de moulage ;
un processus de durcissement consistant à durcir ladite résine thermodurcissable imprégnée dans ledit premier matériau de renfort fibreux et former une première couche de matériau de renfort fibreux (11) ; et
un processus de stratification consistant à stratifier une première couche de matériau de jonction (12), une couche de matériau central poreux (13), une seconde couche de matériau de jonction (14), et une seconde couche de matériau de renfort fibreux (15) sur ladite première couche de matériau de renfort fibreux,
dans lequel, dans le stratifié moulé, ladite première couche de matériau de renfort fibreux, ladite première couche de matériau de jonction, ladite couche de matériau central poreux, ladite seconde couche de matériau de jonction, et ledit second renfort fibreux sont stratifiés dans cet ordre.

2. Procédé de fabrication d'un stratifié moulé selon la revendication 1, le procédé comprenant :
un processus de placement consistant à placer un premier matériau de jonction (12a), un matériau central poreux (13a), un second matériau de jonction (14a), et un second matériau de renfort fibreux (15a) sur ladite première couche de matériau de renfort fibreux dans cet ordre ;
un processus de jonction consistant à joindre mutuellement ladite première couche de matériau de renfort fibreux, ledit matériau central poreux, et ledit second matériau de renfort fibreux par ledit premier matériau de jonction et ledit second matériau de jonction ;
un processus d'imprégnation consistant à imprégner ladite résine thermodurcissable dans ledit second matériau de renfort fibreux ; et
un processus de durcissement consistant à durcir ladite résine thermodurcissable imprégnée dans ledit second matériau de renfort fibreux et former une seconde couche de matériau de renfort fibreux.

3. Stratifié moulé comprenant :
une première couche de matériau de renfort fibreux (11) ;
une première couche de matériau de jonction (12) ;
une couche de matériau central poreux (13) ;
une seconde couche de matériau de jonction (14) ; et
un second renfort fibreux (15) ;
dans lequel tous les éléments ci-dessus sont stratifiés dans cet ordre, et
**caractérisé en ce que** ladite première couche de matériau de renfort fibreux (11) comprend un premier matériau de renfort fibreux durci imprégné d'une résine thermodurcissable, dans lequel l'épaisseur de ladite première couche de matériau de jonction (12) mesure la moitié de l'épaisseur de la seconde couche de matériau de jonction (14).

4. Stratifié moulé selon la revendication 3, dans lequel ladite couche de matériau central poreux est formée par l'un quelconque d'un matériau et d'une mousse en nid d'abeilles.
